# EUROPÄISCHE PATENTSCHRIFT

(11) **EP 0 466 852 B1**
(45) Veröffentlichungstag und Bekanntmachung des Hinweises auf die Patenterteilung: **11.05.1994**
(21) Anmeldenummer: 91901769.9
(22) Anmeldetag: 21.12.1990
(51) Int. Cl.: F16B 25/10, F16B 13/00

(54) **SELBSTBOHRENDER BEFESTIGER**
SELF-DRILLING FASTENING
ELEMENT DE FIXATION AUTOFOREUR

(30) Priorität: 05.02.1990 DE 4003374
(43) Veröffentlichungstag der Anmeldung: 22.01.1992
(73) Patentinhaber: SFS Industrie Holding AG, 9435 Heerbrugg (CH)
(72) Erfinder: PALM, Erich, CH-9435 Heerbrugg (CH)
(74) Vertreter: Ludescher, Hans
(86) Internationale Anmeldenummer: EP9002293
(87) Internationale Veröffentlichungsnummer: WO9111631

(56) Entgegenhaltungen:
- AT-B- 356 462
- DE-A- 2 555 647
- US-A- 3 372 763
- US-A- 3 447 616

## Beschreibung

Die Erfindung betrifft einen selbstbohrenden Befestiger mit einem am Schaft form- und kraftschlüssig befestigbaren, plättchenförmigen Schneidteil.

Der Einsatz von plättchenförmigen Schneidteilen ist sowohl bei Bohrern als auch bei selbstbohrenden Befestigern bekannt. Die Verwendung von plättchenförmigen Schneidteilen ist gegenüber im Querschnitt kreisförmigen Bohrteilen vorteilhafter, weil die Bohrleistung wesentlich besser ist und dem vorgesehenen Einsatzzweck angepaßt werden kann.

Es ist aus der AT-PS 356 462 bekannt, am freien Ende des Schaftes einer Schraube einen mittigen Längsschlitz vorzusehen, in welchen ein Schneidplättchen eingesetzt wird. Dabei sind am Schneidplättchen Erhebungen und/oder Vertiefungen zum form- und/oder kraftschlüssigen Einsetzen in den Längsschlitz der Schraube ausgebildet. Außerdem sind am Schneidplättchen an dem von den Schneiden abgewandten Bereich parallel zur Mittelachse verlaufende Rippen vorgesehen, welche mit Abstand parallel angeordnet sind. Diese Rippen sind an beiden einander abgewandten Flächen angeordnet und schneidenartig ausgebildet und weisen zu diesem Zweck einen dreieckigen Querschnitt auf. Allein durch die Anordnung dieser schneidenartigen Rippen wird ein Festsitz des Schneidplättchens im Längsschlitz erreicht, welcher eine zusätzliche Verklebung überflüssig macht. Selbstverständlich ist bei besonders harten Einsätzen eine zusätzliche Verklebung oder andere Verbindung denkbar, wobei die vorgesehenen Rippen dann eine vorläufige Fixierung und somit eine leichtere Bearbeitung ermöglichen. Diese bekannte selbstbohrende Schraube erfordert also ein aufwendiges Schneidplättchen, ohne daß dadurch aber gewährleistet wäre, daß dieses bei der Montage bezüglich des Schaftes richtig zentriert und ausgerichtet ist.

Aus der DE-OS 25 49 147 ist es bekannt, am freien Ende einer selbstbohrenden Schraube in deren im Querschnitt kreisförmigem und zusätzlich mit Spannuten und Schneiden versehenen Bohrteil einen Schlitz auszubilden, in welchen ein plättchenartiger Schneidteil eingesetzt wird, der in einem zusätzlichen Arbeitsgang dann noch durch Verschweißung, Verlötung oder Verklebung fest mit dem Bohrteil verbunden wird. Auch hier besteht keine Möglichkeit, den plättchenförmigen Schneidteil bei der Montage zu zentrieren, und zusätzlich ist in jedem Fall ein Arbeitsgang zum Herstellen einer festen Verbindung zwischen Schneidteil und Bohrteil erforderlich.

Aus der DE-OS 25 55 647 ist eine Bohrschraube bekannt, deren Schaft am zum Schraubenkopf entgegengesetzten Ende eine Bohrung aufweist. Die Bohrspitze der Schraube ist ein separat hergestelltes Ansatzstück, das einen Befestigungsschaft aufweist, der in die Bohrung des Schaftes eingreift und darin durch Löten oder Kleben befestigt ist. Der Befestigungsschaft kann aber auch als schlanker Kegel ausgebildet und in die hohlkegelig ausgebildete Bohrung der Schraube eingepreßt sein. Bei dieser bekannten Bohrschraube ist zwar eine Zentriermöglichkeit bei der Montage der Bohrspitze vorhanden, die Herstellung der Bohrspitze ist jedoch aufwendig, da sie aus einem plättchenförmigen Teil besteht, an dem der zylindrische oder kegelförmige Befestigungsschaft angeformt oder befestigt werden muß.

Aus der US 22 66 892 ist eine Verankerungsvorrichtung bekannt, die aus einem Bolzen besteht, der einenends mit einem Gewinde und anderenends mit einem angeschmiedeten, pfeilspitzenartigen Kopf versehen ist. Statt dessen kann der Schaft auch mit einem axialen Schlitz versehen sein, in welchem ein plättchenförmiger Kopfteil, der separat hergestellt worden ist, durch Schweißen, Nieten oder dergleichen befestigt werden kann. Eine Zentriermöglichkeit ist dabei nicht vorgesehen.

Die US 37 15 952 und die US 37 18 067 beschreiben eine Expansionsankereinheit bzw. ein Befestigungssystem, bei denen ein plättchenförmiger Schneidteil in einen axialen Schlitz am Ende eines Schaftes eingesetzt und zum Lochbohren darin formschlüssig gehalten wird. Nach dem Bohren des Loches und dem Entfernen des Schaftes wird dann ein anderer schaftartiger Teil in die Bohrung eingetrieben, dabei durch den in der Bohrung verbliebenen plättchenförmigen Schneidteil aufgeweitet und dadurch in dem Loch befestigt. Hier mag zwar eine Zentriermöglichkeit gegeben sein, der plättchenförmige Schneidteil wird jedoch im axialen Schlitz nur lose gehalten, da der Schaft nach dem Bohren ohne den Schneidteil aus dem gebohrten Loch herausgezogen werden soll.

Schließlich ist aus der AT-PS 232 908 ein Bohrer zum Durchbohren von Fliesen, Hartziegeln und ähnlichen mineralischen Materialien bekannt, der einen zylindrischen Bohrerkörper mit einer am Ende ausgebildeten diametralen Nut hat. Die sich längs der Nut erstreckenden Abschnitte des Bohrerkörpers sind in entgegengesetzten Richtungen umgebogen, so daß eine hintere Unterstützung für die außerhalb des zylindrischen Umfangs des Bohrerkörpers ausragenden Teile einer in die Nut eingesetzten Schneidmetallplatte entsteht. Die Schneidmetallplatte ist in der Nut durch Hartlöten oder dergleichen befestigt. Eine Zentriermöglichkeit für die Schneidmetallplatte bei deren Montage ist nicht vorgesehen.

Bei allen oben genannten bekannten selbstbohrenden Befestigern oder Bohrern ist es also schwierig, den plättchenförmigen Schneidteil am Schaft bis zur endgültigen festen Verbindung in der richtigen Position zu halten, damit dann auch eine ordnungsgemäße axiale Ausrichtung zwischen dem plättchenförmigen Schneidteil und dem Schaft gewährleistet ist.

Aufgabe der Erfindung ist es, einen selbstbohrenden Befestiger so auszubilden, daß sich für einen plättchenförmigen Schneidteil ohne zusätzliche Maßnahmen eine ausreichend feste Halterung erzielen läßt und außerdem sichergestellt ist, daß bereits bei der Montage eine ordnungsgemäße Achsausrichtung zwischen Schneidteil und selbstbohrendem Befestiger gegeben ist.

Zur Lösung dieser Aufgabe bietet die Erfindung zwei Möglichkeiten, wobei einerseits vorgeschlagen wird,
● daß der plättchenförmige Schneidteil an seinem dem Schaft zugewandten Endbereich wenigstens einen in der Ebene des Schneidteils liegenden, plättchenförmigen Fortsatz aufweist, daß der den Schneidteil tragende Endbereich des Schaftes eine mittige Öffnung mit kreis-, ellipsen- oder mehreckförmigem Querschnitt aufweist und zur Zentrierung und kraftschlüssigen Halterung des Schneidteiles am Schaft der Fortsatz des Schneidteiles in die Öffnung am Schaft mit Preßsitz einsetzbar und in der Öffnung mit seinen einander gegenüberliegenden, die Schmalseiten des plättchenförmigen Fortsatzes bildenden Seitenbegrenzungen an zwei einander diametral gegenüberliegenden Begrenzungen der Innenwand der Öffnung abgestützt ist,
   und andererseits,
● daß der plättchenförmige Schneidteil an seinem dem Schaft zugewandten Endbereich mehrere mit Abstand aufeinander folgende, in der Ebene des Schneidteiles liegende, plättchenförmige Fortsätze aufweist, daß der den Schneidteil tragende Endbereich des Schaftes einen mittigen, axial vorstehenden Zapfen mit kreis-, ellipsen- oder mehreckförmigem Querschnitt aufweist und zur Zentrierung und kraftschlüssigen Halterung des Schneidteiles am Schaft die Fortsätze des Schneidteiles den Zapfen übergreifend aufsetzbar und auf dem Zapfen mit zwei einander zugewandten, schmalseitigen Seitenbegrenzungen an zwei einander diametral gegenüberliegenden Begrenzungen der Außenwandung des Zapfens mit Preßsitz abgestützt sind.

Durch die Erfindung wird erreicht, daß der Schneidteil praktisch in nur einem Arbeitsgang durch Einstecken in eine Öffnung bzw. Aufdrücken auf einen Zapfen exakt mit der Befestigerachse ausgerichtet, axial gesichert und in die Lage versetzt werden kann, das notwendige Drehmoment zu übertragen. Bei vielfachen Versuchen hat sich gezeigt, daß bei einem selbstbohrenden Befestiger auf die erfindungsgemäße Art und Weise ein plättchenförmiger Schneidteil nicht nur exakt ausgerichtet montiert werden kann, sondern daß auch allein durch das Einsetzen oder Aufdrücken des plättchenförmigen Schneidteiles mit Preßsitz der erforderliche Kraftschluß zur Übertragung des beim Bohren auftretenden Drehmomentes erzielbar ist. Es ist auch eine ausreichende axiale Sicherung zwischen dem plättchenförmigen Schneidteil und dem Schaft des Befestigers gewährleistet, so daß der Schneidteil unverlierbar im Schaft gehalten ist. Dabei ist zu bedenken, daß der plättchenförmige Schneidteil bei einem selbstbohrenden Befestiger nur für einen Bohrvorgang ausreichend gesichert werden muß, da eine selbstbohrende Schraube nicht zu nochmaligem Einsatz wieder herausgeschraubt wird. Es wäre also durchaus möglich, dass der plättchenförmige Schneidteil bei einem eventuellen Herausschrauben abgestreift würde, wobei das aber bei selbstbohrenden Befestigern keine Bedeutung hätte, denn der plättchenförmige Schneidteil muss lediglich für einen Bohrvorgang ausreichend zur Uebertragung des Drehmomentes gehalten sein, und ausserdem muss der Schneidteil vor dem Bohrvorgang unverlierbar am Schaft festgehalten werden.

Es muss bei selbstbohrenden Befestigern bedacht werden, dass es sich hier um Massenartikel handelt, die möglichst einfach in einem Arbeitsgang durch Kaltumformen des Materials hergestellt werden sollen, und dass die Zuordnung des Schneidteiles ebenfalls nur in einem Arbeitsgang erfolgen soll, wobei es lediglich einer derart guten Befestigung bedarf, dass ein einziger Bohrvorgang ausgeführt werden kann.

Es hat sich auch gezeigt, dass sich der selbstbohrende Befestiger nach der Erfindung wesentlich einfacher herstellen lässt als bekannte selbstbohrende Befestiger, bei denen der plättchenförmige Schneidteil in eine diametrale Nut eingesetzt werden muss, denn die Ausbildung einer Oeffnung bzw. eines Zapfens am freien Ende des Schaftes des selbstbohrenden Befestigers nach der Erfindung ist wesentlich einfacher als die Herstellung einer entsprechenden Nut.

Vorteilhafte Ausgestaltungen der Erfindung bilden den Gegenstand der Unteransprüche.

Sollte beispielsweise beim Einsatz ein sehr hohes Drehmoment übertragen werden müssen, dann besteht die Möglichkeit, die Verbindung durch entsprechende Verformung des an den plättchenförmigen Schneidteil anschliessenden Schaftbereiches eine zusätzliche Sicherheit zu schaffen. Bei einem selbstbohrenden Befestiger reicht für einen einmaligen Bohreinsatz des plättchenförmigen Schneidteiles im allgemeinen aber bereits die erfindungsgemässe Presssitzhalterung des Schneidteiles am Schaft aus, wie oben dargelegt.

Es ist an sich bekannt, z.B. aus der oben erwähnten DE-OS 25 55 647, am freien Ende eines Befestigerschaftes eine Oeffnung vorzusehen, in welche dann ein im Querschnitt kreisförmiger, zapfenartiger Abschnitt eines ansonsten plättchenförmigen Schneidteiles eingesetzt wird. Das ist bei Presssitzpassungen im Stand der Technik üblich, denn es wird gewöhnlich Wert darauf gelegt, dass die ineinanderfügbaren Teile eine korrespondierende Querschnittsform und -grösse aufweisen. Die Erfindung zieht hingegen die Möglichkeit in Betracht, ein Teil mit plattenartigem Querschnitt in einer im Querschnitt gänzlich anderen, kreis-, ellipsen- oder mehreckförmigen Oeffnung mit Presssitz festzuhalten. Gerade durch diese erfindungsgemässe Massnahme kann eine optimale Verbindung zwischen einem plättchenförmigen Schneidteil und einem Schaft eines selbstbohrenden Befestigers geschaffen und gleichzeitig der Schneidteil beim Einsetzen zentriert werden, wobei trotzdem eine einfache Fertigung des Schaftes (durch Umformen) und des Schneidteiles (durch Stanzen) möglich ist.

Erfindungsgemäss wird ferner vorgeschlagen, dass die Dicke des Fortsatzes bzw. der Fortsätze zumindest annähernd der Dicke des an den Fortsatz unmittelbar anschliessenden Bereiches des Schneidteiles entspricht. Es ist daher gerade auch bei der erfindungsgemässen Verbindungsart möglich, den Schneidteil als Stanzteil auszuführen.

Weiters wird vorgeschlagen, dass die Seitenbegrenzungen des Fortsatzes zumindest am freien Ende desselben zueinander konvergieren bzw. die einander zugewandten Seitenbegrenzungen zweier Fortsätze zumindest am freien Ende derselben zueinander divergieren. Es ist dadurch beim Zusammenfügen von plättchenförmigem Schneidteil und Schaft ein einfaches Einführen des Fortsatzes bzw. der Fortsätze möglich, wobei bei weiterem Eindrücken der Presssitz, also die Anpresskraft, ständig erhöht wird.

In diesem Zusammenhang ist es auch denkbar, dass die Oeffnung im bzw. der Zapfen am Befestigerschaft zumindest auf einen Teilbereich ihrer Tiefe bzw. seiner Länge sich konisch verjüngend ausgebildet ist. Es können dann die Seitenbegrenzungen des Fortsatzes parallel zueinander verlaufen oder ebenfalls geringfügig konvergieren bzw. divergieren, wobei die grösste Anpresskraft für den Presssitz nach dem gänzlichen Zusammenfügen der Teile erzielt wird.

Um ein leichteres Einführen des Fortsatzes bzw. der Fortsätze in die Oeffnung bzw. auf den Zapfen des Schaftes zu bewirken, wird vorgeschlagen, dass der Fortsatz bzw. die Fortsätze des Schneidteiles am Uebergang zwischen den Seitenbegrenzungen und der Frontbegrenzung abgerundet ausgeführt ist bzw. sind.

Eine besondere Möglichkeit zur zusätzlichen Erhöhung des möglichen Drehmomentes ist dann gegeben, wenn die im Querschnitt mehreckförmige Oeffnung eine gerade Anzahl von Eckbereichen aufweist, wobei die Seitenbegrenzungen des Fortsatzes des Schneidteiles in zwei einander diametral gegenüberliegende Eckbereiche der Oeffnung mit Presssitz eingreifen. Es ist daher bei einer solchen Anordnung von vorneherein durch einfaches Einstecken des plättchenförmigen Schneidteiles neben der kraftschlüssigen Verbindung auch eine formschlüssige Verbindung gegeben, die es ermöglicht, beim Bohrvorgang ein grosses Drehmoment vom Schaft auf den Schneidteil zu übertragen.

Um die formschlüssige Verbindung neben der kraftschlüssigen Verbindung noch zu verbessern, besteht die Möglichkeit, dass der Schneidteil an seiner dem Fortsatz zugewandten Begrenzung in den den Fortsatz seitlich überragenden Bereichen bzw. in den zwischen zwei Fortsätzen liegenden Bereichen mit schneidenartigen Kanten versehen ist. Beim Einsetzen des plättchenförmigen Schneidteiles dringen diese schneidenartigen Kanten in den freien Endabschnitt des Schaftes ein und bewirken so eine zusätzliche formschlüssige Verbindung.

Wenn eine optimale form- und kraftschlüssige Verbindung ohne die Notwendigkeit zusätzlicher Verbindungsmassnahmen wie Schweissen, Löten oder Kleben erreicht werden soll, dann wird vorgesehen, dass am freien Ende des Befestigerschaftes von der Oeffnung bzw. vom Zapfen ausgehend radial ausgerichtete Schlitze vorgesehen sind, wobei in Achsrichtung des Schaftes von dessen freiem Ende aus gemessen die Tiefe der Oeffnung bzw. vom Schlitzgrund zum freien Ende des Schaftes hin gemessen die Länge des Zapfens wenigstens zwei- bis dreimal so gross ist wie die Tiefe des Schlitzes.

Eine weitere Ausführungsvariante zur kraft- und formschlüssigen Verbindung zwischen Schneidteil und Schaft liegt darin, dass am freien Ende des Befestigerschaftes an dessen Aussenwandung einseitig oder an zwei diametral gegenüberliegenden Stellen eine achsparallele Nut bzw. Nuten ausgebildet sind, und dass der Schneidteil an einer oder beiden Seitenbegrenzungen parallel zum Fortsatz abragende Leiste(n) aufweist, welche in montiertem Zustand in die Nut(en) am Befestigerschaft eingreift bzw. eingreifen. Der am Schneidteil vorgesehene Fortsatz bewirkt die Zentrierung und kraftschlüssige Halterung des Schneidteiles am Schaft, und die achsparallel abragenden Leisten bzw. die abragende Leiste wirkt als Mitnehmer zur Uebertragung entsprechend grosser Drehmomente. Durch die erfindungsgemässen Massnahmen ist durch die kraftschlüssige Halterung des Schneidteiles am Schaft von vorneherein eine entsprechende exakte axiale Ausrichtung zwischen Schneidteil und Schaft gewährleistet. Wenn aber zusätzlich eine formschlüssige und absolut feste Verbindung zwischen den beiden ineinandergesteckten Teilen erzielt werden soll, dann besteht die Möglichkeit, dass an der Stirnseite des Befestigerschaftes ein- oder beidseitig der mittigen Oeffnung bzw. des mittigen Zapfens durch Eindrücken oder Anpressen ausgeformte Wülste, Nasen oder dergleichen zur beidseitigen form- und/oder kraftschlüssigen Halterung des Schneidteiles vorgesehen sind.

Es besteht dabei auch die Möglichkeit, dass das freie Ende des Befestigerschaftes nach dem Einsetzen des Schneidteiles mit Fortsatz im Bereich der mittigen Oeffnung durch Eindrücken oder Anpressen verformbar ist. Auch auf diese Weise kann neben der kraftschlüssigen Halterung zusätzlich eine formschlüssige Verbindung geschaffen werden.

Ausführungsbeispiele der Erfindung werden im folgenden unter Bezugnahme auf die Zeichnungen näher beschrieben. Es zeigen:
- Fig. 1: eine Vorderansicht eines als Niet ausgebildeten selbstbohrenden Befestigers, der teilweise aufgeschnitten dargestellt ist;
- Fig. 2: den Niet in Seitenansicht, ebenfalls teilweise aufgeschnitten dargestellt;
- Fig. 3: den Bohrabschnitt des Niets in Ansicht von unten;
- Fig. 4: einen Schnitt durch den Endbereich des Schaftes gemäss Fig. 1;
- Fig. 5: eine Ansicht des Schaftes von unten;
- Fig. 6 und 7: ein Schneidteil in Vorder- bzw. in Seitenansicht;
- Fig. 8: einen als Schraube ausgebildeten selbstbohrenden Befestiger mit eingesetztem Schneidteil;
- Fig. 9: eine Seitenansicht, teilweise aufgeschnitten dargestellt, des Verbindungsbereiches zwischen Schneidteil und Schaft gemäss Fig. 8;
- Fig. 10 und 11: eine Seiten- und eine Vorderansicht einer Verbindungsmöglichkeit zwischen Schneidteil und Schaft mit zusätzlicher Verformung am Schaft;
- Fig. 12 und 13: zwei Ausführungsvarianten eines Schneidteiles mit gegen den Schaft gerichteten schneidenartigen Begrenzungen;
- Fig. 14: einen Schneidteil mit mehreren Fortsätzen und einer besonderen Ausbildung des Schaftendes;
- Fig. 15: eine Ansicht des Endes des Schaftes gemäss Fig. 14;
- Fig. 16 und 17: Ansichten des Schaftes von unten, wobei mehreckige Oeffnungen vorgesehen sind;
- Fig. 18: den Verbindungsbereich eines Schneidteiles mit einem Schaft entsprechend einer Ausführung nach Fig. 17;
- Fig. 19: eine besondere Ausbildung des Fortsatzes eines Schneidteiles;
- Fig. 20: eine Verbindungsmöglichkeit zwischen Schneidteil und Schaft mit einem am Schaft ausgebildeten Zapfen;
- Fig. 21: den bei der Ausführung nach Fig. 20 eingesetzten Schneidteil in Vorderansicht;
- Fig. 22: eine Ansicht der Verbindung nach Fig. 20 von unten gesehen.

In der nachstehenden Beschreibung wird ein selbstbohrender Befestiger anhand von selbstbohrenden Nieten und selbstbohrenden und gewindeschneidenden Schrauben erläutert. Unter einem selbstbohrenden Befestiger ist hier aber auch eine Ausbildung eines Dübels zu verstehen, welcher ohne Vorbohren, also selbstbohrend, eingesetzt werden kann.

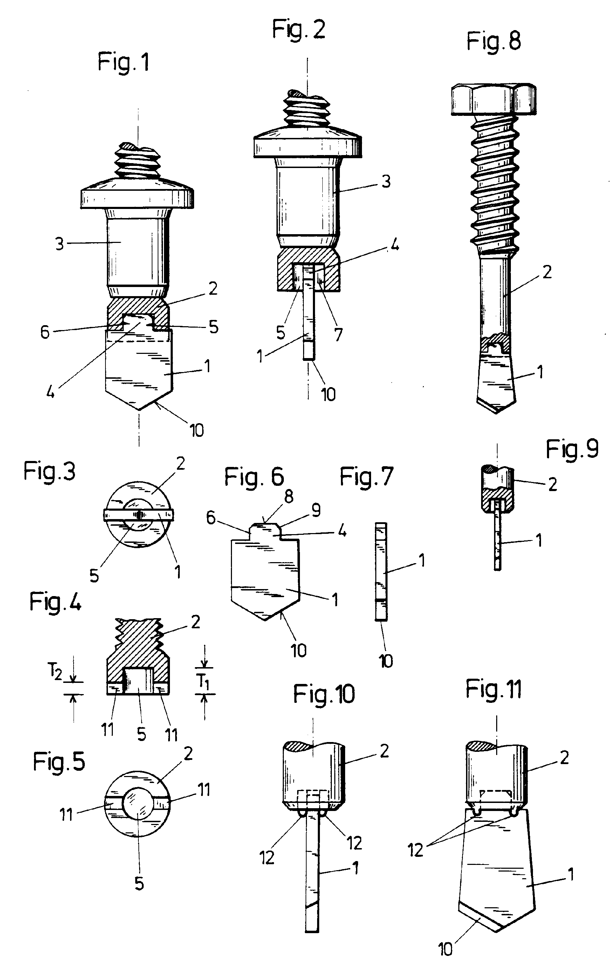

Die Bohranordnung des Befestigers besteht aus einem plättchenförmigen Schneidteil 1, welcher form- und/oder kraftschlüssig an einem Schaft 2 befestigt ist. Bei der Ausführung nach den Fig. 1 bis 3 bildet der Schaft 2 den Zugteil zur Verformung eines Nietkörpers 3. Der Schneidteil 1 weist einen in der Ebene des Schneidteiles liegenden Fortsatz 4 auf, und am Endbereich des Schaftes 2 ist eine im Querschnitt kreisförmige Oeffnung 5 ausgebildet. Der Fortsatz 4 des Schneidteiles 1 ist in die Oeffnung 5 am Schaft 2 einsetzbar, wobei der Fortsatz 4 mit seinen beiden Seitenbegrenzungen 6 an zwei einander diametral gegenüberliegenden Begrenzungen der Innenwandung 7 der Oeffnung 5 mit Presssitz abgestützt ist.

Bei dieser Ausführungsform weist die mittige Oeffnung 5 zwar einen kreisförmigen Querschnitt auf, es ist jedoch auch denkbar, hier einen ellipsen- oder mehreckförmigen Querschnitt dieser Oeffnung 5 vorzusehen, wobei die Begrenzungswände eben, gebogen oder auch gestuft ausgebildet sein können.

In den Fig. 4 und 5 ist der Endbereich des Schaftes 2 und in den Fig. 6 und 7 der Schneidteil 1 einzeln dargestellt. Die Dicke des Fortsatzes 4 des Schneidteiles 1 entspricht zumindest annähernd der Dicke des an den Fortsatz 4 unmittelbar anschliessenden Bereiches des Schneidteiles 1. Es ist daher in einfacher Weise möglich, den Schneidteil 1 als Stanzteil auszubilden. Um ein leichteres Einführen des Fortsatzes 4 in die Oeffnung 5 zu gewährleisten, ist am Uebergang zwischen den Seitenbegrenzungen 6 und der Frontbegrenzung 8 eine Abknickung 9 oder eine entsprechende Abrundung vorgesehen. Am freien Ende des Schneidteiles 1 ist eine in üblicher Weise ausgebildete Bohrschneide 10 vorgesehen.

Am freien Ende des Schaftes 2 sind von der Oeffnung 5 ausgehend radial ausgerichtete Schlitze 11 vorgesehen, wobei in Achsrichtung des Schaftes 2 von dessen freiem Ende aus gemessen die Tiefe T1 der Oeffnung 5 wenigstens zwei- bis dreimal so gross ist wie die Tiefe T2 der Schlitze 11. Durch diese Ausbildung ist sowohl eine kraft- als auch eine formschlüssige Verbindung zwischen dem Schneidteil 1 und dem Schaft 2 geschaffen, so dass auch ein entsprechend grosses Drehmoment übertragen werden kann. Der im Presssitz in die Oeffnung 5 am Schaft 2 eingeführte Fortsatz 4 des Schneidteiles 1 bewirkt eine unverlierbare Halterung des Schneidteiles 1 am Schaft 2, und durch die in die Schlitze 11 eingreifenden Bereiche des Schneidteiles 1 ist eine ordnungsgemässe Drehmitnahme gewährleistet. Es ist in diesem Zusammenhang auch denkbar, nur auf einer Seite einen Schlitz 11 von der Oeffnung 5 ausgehend vorzusehen, da dies für die Mitnahme ausreichend wäre, doch ist dann eine entsprechend andere Stanzform für den Schneidteil 1 zu wählen.

Es wäre zwar vorstellbar, zusätzlich zu den bereits ausreichenden form- und kraftschlüssigen Verbindungen zwischen Schneidteil 1 und Schaft 2 eine feste Verbindung zu schaffen, z.B. diese zu verschweissen, zu verlöten oder zu verkleben, was jedoch in den meisten Fällen überflüssig ist und daher aus Kostengründen unterbleiben wird.

Die Fig. 8 und 9 zeigen die Bohranordnung bei einer selbstbohrenden und gewindeschneidenden Schraube. Es ist hier praktisch die gleiche Anordnung gewählt wie bei der Ausführung nach den Fig. 1 bis 7, so dass auf die dortige Erläuterung verwiesen werden kann.

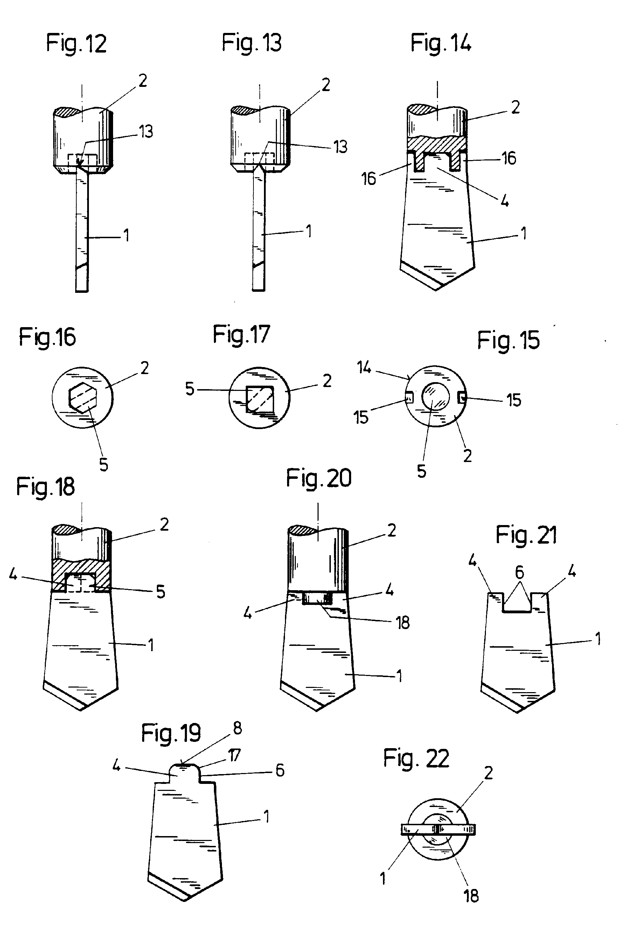

Bei der Ausführung nach den Fig. 10 und 11 ist ersichtlich, dass bei der Notwendigkeit der Uebertragung grosser Drehmomente anstelle der bei der Ausführung nach den Fig. 1 bis 7 vorgesehenen Schlitze 11 nach dem Einsetzen des Schneidteiles 1 an der Stirnseite des Schaftes 2 ein- oder beidseitig der mittigen Oeffnung 5 Wülste 12, Nasen oder dergleichen zur beidseitigen form- und/oder kraftschlüssigen Halterung des Schneidteiles 1 durch Eindrücken oder Anpressen angeformt werden. In diesem Zusammenhang ist es auch möglich, das freie Ende des Schaftes 2 nach dem Einsetzen des Schneidteiles 1 mit Fortsatz 4 im Bereich der mittigen Oeffnung 5 durch Eindrücken oder Anpressen zu verformen.

Bei der Ausführung nach den Fig. 12 und 13 geht es darum, dass der Schneidteil 1 an seiner dem Fortsatz zugewandten Begrenzung an den den Fortsatz seitlich überragenden Bereichen mit schneidenartigen Kanten 13 versehen ist. Beim Eindrücken des Fortsatzes in die Oeffnung am Schaft 2 wird die schneidenartige Kante 13 in den freien Endbereich des Schaftes 2 eingepresst, so dass ein entsprechend hohes Drehmoment übertragen werden kann. Je nach Drehrichtung beim Bohren wird dabei die schneidenartige Kante 13 der einen oder der anderen Oberfläche des Schneidteiles 1 zugewandt sein, um eine ordnungsgemässe Mitnahme zu ermöglichen.

Bei der Ausführung nach den Fig. 14 und 15 sind am freien Ende des Schaftes 2 an dessen Aussenwandung 14 an zwei diametral gegenüberliegenden Stellen achsparallele Nuten 15 ausgebildet. Der Schneidteil 1 weist dazu an beiden Seitenbegrenzungen parallel zum Fortsatz 4 ausgerichtete Leisten 16 auf, welche in montiertem Zustand in die Nuten 15 am Schaft 2 eingreifen. Es wäre auch bei dieser Ausführung denkbar, lediglich eine solche Leiste 16 neben dem Fortsatz 4 anzuordnen, da auch eine einzige solche Leiste 16 in der Lage wäre, das notwendige Drehmoment zwischen Schaft 2 und Schneidteil 1 zu übertragen.

In diesem Zusammenhang - da dies auch aus dem Schnitt nach Fig. 14 zu erläutern ist - wäre es auch denkbar, die Leisten 16 zusammen mit dem Fortsatz 4 ebenfalls als Fortsätze zu bezeichnen, wobei in einem solchen Falle am freien Ende des Schaftes 2 ein ringförmiger Körper angeformt wäre, der also einerseits eine Oeffnung 5 hätte und andererseits an seiner Aussenwandung einen Zapfen bilden würde. Die Seitenbegrenzungen des Fortsatzes 4 würden dann also im Presssitz an den Innenwandungen der Oeffnung 5 anliegen und die Innenbegrenzungen der Leisten 16 würden dann im Presssitz an der Aussenwandung dieses ringförmigen Körpers abgestützt sein.

Bei der Ausführung nach den Fig. 16 und 17 ist ersichtlich, dass die Oeffnung 5 im Schaft 2 im Querschnitt mehreckförmig ausgebildet ist. Es ist dabei notwendig, dass die mehreckige Oeffnung 5 eine gerade Anzahl von Eckbereichen aufweist, oder dass zumindest zwei Eckbereiche einander exakt diametral gegenüberliegen. Die Seitenbegrenzungen des Fortsatzes 4 des Schneidteiles 1 greifen dabei in diese zwei einander diametral gegenüberliegenden Eckbereiche der Oeffnung 5 ein und werden dort mit Presssitz eingeschoben. Es ist dadurch von vorneherein neben einer kraftschlüssigen Verbindung durch das Einschieben mit Presssitz auch eine formschlüssige Verbindung gewährleistet, die die Uebertragung eines entsprechenden Drehmomentes ermöglicht. In Fig. 18 ist eine solche Ausführungsvariante in Vorderansicht dargestellt, wobei der unmittelbare Verbindungsbereich aufgeschnitten wurde.

In Fig. 19 ist eine Ausführungsvariante eines Schneidteiles 1 gezeigt, bei der am Uebergangsbereich zwischen den Seitenbegrenzungen 6 und der Frontbegrenzung 8 des Fortsatzes 4 Abrundungen 17 vorgesehen sind.

Bei der Ausführung nach den Fig. 20 bis 22 geht es darum, anstelle einer bei den anderen Ausführungsformen vorgesehenen Oeffnung 5 einen entsprechenden Zapfen 18 am freien Ende des Schaftes 2 auszubilden. Der Schneidteil 1 weist dann zwei mit Abstand voneinander angeordnete Fortsätze 4 auf, wobei die Innenseitenbegrenzungen 6 der Fortsätze 4 mit Presssitz auf die Aussenwandung des Zapfens 18 aufgeschoben werden. Es ist auch bei einer solchen Ausführung eine exakte achsparallele Ausrichtung zwischen Schneidteil 1 und Schaft 2 möglich, wobei jedoch auch bei einer solchen Anordnung zusätzliche Massnahmen, wie z.B. Schlitze, Nuten, Leisten usw. vorgesehen werden sollten, wenn grosse Drehmomente übertragen werden müssen. Auch bei einem solchen Zapfen 18 sind verschiedene Querschnittformen denkbar, wobei insbesondere eine mehreckige Ausbildung eine Erhöhung des zu übertragenden Drehmomentes ergeben würde. Es wäre dabei auch möglich, die Zwischenbereiche zwischen den aufeinander folgenden Ecken konkav oder auch konvex gewölbt auszubilden, um dadurch durch die besondere Wahl des Angriffspunktes der Seitenbegrenzungen der Fortsätze eine Erhöhung der möglichen Uebertragung eines Drehmomentes zu bewirken.

Sowohl bei der Ausbildung der Oeffnung 5 als auch bei der Ausbildung des Zapfens 18 besteht die Möglichkeit, die Teile zur leichten Einführung und zum kontinuierlichen Erhöhen der Festigkeit des Presssitzes konisch verlaufend auszubilden. Die Seitenbegrenzungen 6 des Fortsatzes 4 bzw. der Fortsätze 4 können daher zumindest am freien Ende derselben zueinander konvergieren bzw. die einander zugewandten Seitenbegrenzungen zweier Fortsätze 4 können zumindest am freien Ende derselben zueinander divergieren. Es ist in diesem Zusammenhang auch möglich, die Oeffnung 5 im bzw. den Zapfen 18 am Schaft 2 zumindest auf einem Teilbereich ihrer Tiefe bzw. seiner Länge sich konisch verjüngend auszubilden.

In der vorstehenden Beschreibung wurde stets von einer Oeffnung 5 und von einem Zapfen 18 gesprochen. Es ist auch möglich, am freien Endbereich des Schaftes 2 zwei oder mehr als zwei Oeffnungen bzw. Zapfen vorzusehen, wobei dann entsprechend viele Fortsätze 4 am Schneidteil 1 anzuordnen sind. Eine solche Ausbildung ist natürlich nur dann denkbar, wenn der Schaft 2 einen entsprechend grossen Durchmesser aufweist. Bei Anordnung von mehr als einer Oeffnung ist dann auf jeden Fall neben der kraftschlüssigen gegenseitigen Verbindung zusätzlich eine formschlüssige Verbindung zur Uebertragung hoher Drehmomente gewährleistet.

Es ist auch möglich, die Oeffnung 5 oder den Zapfen 18 und entsprechend auch den Fortsatz 4 oder die Fortsätze 4 über deren Tiefe, Höhe bzw. Länge abgestuft auszubilden.

Die Auswahl von Materialien für den Schneidteil 1 und den Schaft 2 hängt ganz von dem bestimmten Einsatzzweck ab, so dass jetzt gerade durch die hier beschriebene Ausbildung die Möglichkeit einer vielfältigen Materialwahl gegeben ist. So wäre es auch denkbar, den Schaft 2 als Kunststoffteil auszubilden oder aus jedem anderen denkbaren Material.

Wenn eine Verbindung des Schneidteiles 1 mit dem Schaft 2 allein durch das Aufschieben des Schneidteiles 1 erzielt wird, also die Halterung allein durch den Presssitz ausreicht, dann ist auch eine einfache Möglichkeit geschaffen, den Schneidteil 1 nach dem Bohrvorgang durch eine Schlag- oder Ziehbewegung zu entfernen. Dies kann insbesondere dann von Bedeutung sein, wenn an der Rückseite des anzubohrenden Teiles eine Verletzungsgefahr ausgeschlossen werden soll.

## Patentansprüche

1. Selbstbohrender Befestiger mit einem am Schaft (2) form- und/oder kraftschlüssig befestigbaren, plättchenförmigen Schneidteil (1), **dadurch gekennzeichnet**, daß der plättchenförmige Schneidteil (1) an seinem dem Schaft (2) zugewandten Endbereich wenigstens einen in der Ebene des Schneidteils (1) liegenden, plättchenförmigen Fortsatz (4) aufweist, daß der den Schneidteil (1) tragende Endbereich des Schaftes (2) eine mittige Öffnung (5) mit kreis-, ellipsen- oder mehreckförmigem Querschnitt aufweist und zur Zentrierung und kraftschlüssigen Halterung des Schneidteiles (1) am Schaft (2) der Fortsatz (4) des Schneidteiles (1) in die Öffnung (5) am Schaft mit Preßsitz einsetzbar und in der Öffnung (5) mit seinen einander gegenüberliegenden, die Schmalseiten des plättchenförmigen Fortsatzes (4) bildenden Seitenbegrenzungen (6) an zwei einander diametral gegenüberliegenden Begrenzungen der Innenwand (7) der Öffnung (5) abgestützt ist.

2. Befestiger nach Anspruch 1, dadurch gekennzeichnet, daß die Seitenbegrenzungen (6) des Fortsatzes (4) zumindest am freien Ende desselben zueinander konvergieren.

3. Befestiger nach Anspruch 1 oder 2, dadurch gekennzeichnet, daß die Öffnung (5) im Schaft (2) zumindest auf einem Teilbereich ihrer Tiefe sich konisch verjüngend ausgebildet ist.

4. Befestiger nach einem der Ansprüche 1 bis 3, dadurch gekennzeichnet, daß der Fortsatz (4) am Übergang zwischen seinen Seitenbegrenzungen (6) und seiner Frontbegrenzung (8) abgerundet ausgeführt ist.

5. Befestiger nach einem der Ansprüche 1 bis 4, dadurch gekennzeichnet, daß die Öffnung (5) im Schaft (2), die einen mehreckförmigen Querschnitt hat, eine gerade Anzahl von Eckbereichen aufweist, wobei die Seitenbegrenzungen (6) des Fortsatzes (4) des Schneidteiles (1) in zwei einander diametral gegenüberliegende Eckbereiche der Öffnung (5) mit Preßsitz eingreifen.

6. Befestiger nach einem der Ansprüche 1 bis 5, dadurch gekennzeichnet, daß der Schneidteil (1) an seiner dem Fortsatz (4) zugewandten Begrenzung in den den Fortsatz (4) seitlich überragenden Bereichen mit schneidenartigen Kanten (13) versehen ist.

7. Befestiger nach einem der Ansprüche 1 bis 6, dadurch gekennzeichnet, daß zur zusätzlichen formschlüssigen Verbindung zwischen Schneidteil (1) und Schaft (2) am freien Ende des Schaftes (2) von der Öffnung (5) ausgehend radial ausgerichtete Schlitze (11) vorgesehen sind, wobei in Achsrichtung des Schaftes (2) von dessen freiem Ende aus gemessen die Tiefe (T1) der Öffnung (5) wenigstens zwei- bis dreimal so groß ist wie die Tiefe (T2) der Schlitze (11).

8. Befestiger nach Anspruch 1, dadurch gekennzeichnet, daß zur zusätzlichen formschlüssigen Verbindung zwischen Schneidteil (1) und Schaft (2) am freien Ende des Schaftes (2) an dessen Außenwandung einseitig eine achsparallele Nut ausgebildet ist oder beidseitig an zwei diametral gegenüberliegenden Stellen zwei achsparallele Nuten (15) ausgebildet sind, und daß der Schneidteil (1) an einer oder beiden Seitenbegrenzungen (6) eine parallel zum Fortsatz (4) abragende Leiste (16) aufweist, welche in montiertem Zustand in ihre Nut (1 5) am Schaft (2) eingreift.

9. Befestiger nach einem der Ansprüche 1 bis 8, dadurch gekennzeichnet, daß an der Stirnseite des Schaftes (2) ein- oder beidseitig der mittigen Öffnung (5) durch Eindrücken oder Anpressen ausgeformte Wülste (12), Nasen oder dergleichen zur zusätzlichen formschlüssigen Halterung des Schneidteiles (1) vorgesehen sind.

10. Selbstbohrender Befestiger mit einem am Schaft (2) form- und/oder kraftschlüssig befestigbaren, plättchenförmigen Schneidteil (1), **dadurch** **gekennzeichnet**, daß der plättchenförmige Schneidteil (1) an seinem dem Schaft (2) zugewandten Endbereich mehrere mit Abstand aufeinander folgende, in der Ebene des Schneidteiles (1) liegende, plättchenförmige Fortsätze (4) aufweist, daß der den Schneidteil (1) tragende Endbereich des Schaftes (2) einen mittigen, axial vorstehenden Zapfen (18) mit kreis-, ellipsen- oder mehreckförmigem Querschnitt aufweist und zur Zentrierung und kraftschlüssigen Halterung des Schneidteiles (1) am Schaft (2) die Fortsätze (4) des Schneidteiles (1) den Zapfen (18) übergreifend aufsetzbar und auf dem Zapfen (18) mit zwei einander zugewandten, schmalseitigen Seitenbegrenzungen (6) an zwei einander diametral gegenüberliegenden Begrenzungen der Außenwandung des Zapfens (18) mit Pleßsitz abgestützt sind.

11. Befestiger nach Anspruch 10, dadurch gekennzeichnet, daß die einander zugewandten Seitenbegrenzungen (6) zweier Fortsätze (4) zumindest am freien Ende derselben zueinander divergieren.

12. Befestiger nach Anspruch 10 oder 11, dadurch gekennzeichnet, daß der Zapfen (18) am Schaft (2) zumindest auf einem Teilbereich seiner Länge sich konisch verjüngend ausgebildet ist.

13. Befestiger nach einem der Ansprüche 10 bis 12, dadurch gekennzeichnet, daß die Fortsätze (4) des Schneidteiles (1) am Übergang zwischen ihren Seitenbegrenzungen (6) und ihrer Frontbegrenzung (8) abgerundet ausgeführt sind.

14. Befestiger nach einem der Ansprüche 10 bis 13, dadurch gekennzeichnet, daß der Schneidteil (1) in dem zwischen zwei Fortsätzen (4) liegenden Bereich mit schneidenartigen Kanten (13) versehen ist.

15. Befestiger nach einem der Ansprüche 10 bis 14, dadurch gekennzeichnet, daß zur zusätzlichen formschlüssigen Verbindung zwischen Schneidteil (1) und Schaft (2) am freien Ende des Schaftes (2) vom Zapfen (18) ausgehend radial ausgerichtete Schlitze (11) vorgesehen sind, wobei in Achsrichtung des Schaftes (2) von dessen freiem Ende aus gemessen die Länge des Zapfens (18) vom Schlitzgrund zum freien Ende des Schaftes (2) hin gemessen wenigstens zwei- bis dreimal so groß ist wie die Tiefe (T2) der Schlitze (11).

16. Befestiger nach einem der Ansprüche 10 bis 15, dadurch gekennzeichnet, daß an der Stirnseite des Schaftes (2) ein- oder beidseitig des mittigen Zapfens (18) durch Eindrücken oder Anpressen ausgeformte Wülste (12), Nasen oder dergleichen zur zusätzlichen formschlüssigen Halterung des Schneidteiles (1) vorgesehen sind.

## Claims

1. A self-boring fastener with a lamellar cutting part (1) which can be fastened to the shank (2) in a form-locking or force-locking manner, characterised in that in its end region nearest the shank (2) the lamellar cutting part (1) has a lamellar extension (4) disposed in the plane of the cutting part (1), in that the end region of shank (2) carrying the cutting part (1) has a central opening (5) of circular, elliptical or polygonal cross-section and for the centering and force-locking mounting of the cutting part (1) on the shank (2) the extension (4) of the cutting part (1) can be inserted with an interference fit in the opening (5) in the shank, and in the opening (5) with its mutually opposing lateral boundaries (6) forming the narrow sides of the lamellar extension (4) it bears against two diametrically opposed boundaries of the inner wall (7) of the opening (5).

2. A fastener according to Claim 1, characterised in that the lateral boundaries (6) of the extension (4) converge towards one another at least at the free end thereof.

3. A fastener according to Claim 1 or 2, characterised in that the opening (5) in the shank (2) is formed tapering conically at least for a part of its depth.

4. A fastener according to any one of Claims 1 to 3, characterised in that the extension (4) is formed rounded at the transition between its lateral boundaries (6) and its front boundary (8).

5. A fastener according to any one of Claims 1 to 4, characterised in that the opening (5) in the shank (2), which is of polygonal cross-section, has an even number of corner zones, wherein the lateral boundaries (6) of the extension (4) of the cutting part (1) engage with an interference fit in two diametrically opposed corner zones of the opening (5)

6. A fastener according to any one of Claims 1 to 5, characterised in that at its boundary nearest the extension (4) the cutting part (1) is provided with cutting-edge like edges (13) in the regions protruding laterally beyond the extension (4).

7. A fastener according to any one of Claims 1 to 6, characterised in that, for an additional form-locking connection between the cutting part (1) and the shank (2) radially directed slots (11) originating from the opening (5) are provided at the free end of the shank (2), wherein in the axial direction of the shank (2), measured from its free end, the depth (T1) of the opening (5) is at least two to three times as great as the depth (T2) of the slots (11)

8. A fastener according to Claim 1, characterised in that, for an additional form-locking connection between the cutting part (1) and the shank (2) an axially parallel groove is formed at the free end of the shank (2) on the outer wall and on one side thereof, or two axially parallel grooves (15) are formed on both sides at two diametrically opposed locations, and in that at one or both lateral boundaries (6) the cutting part (1) has a bar (16) which projects parallel to the extension (4) and which, in the installed condition, engages in its groove (15) in the shank (2).

9. A fastener according to any one of Claims 1 to 8, characterised in that beads (12), lugs or the like, which are formed by stamping or pressing, are provided at the end face of the shank (2) on one or both sides of the central opening (5) for the additional form-locking mounting of the cutting part (1).

10. A self-boring fastener with a lamellar cutting part (1) which can be fastened to the shank (2) in a form-locking or force-locking manner, characterised in that in its end region nearest the shank (2) the lamellar cutting part (1) has a plurality of lamellar extensions (4) spaced apart in succession and disposed in the plane of the cutting part (1), in that the end region of shank (2) carrying the cutting part (1) has a central axially protruding stud (18) of circular, elliptical or polygonal cross-section and for the centering and force-locking mounting of the cutting part (1) on the shank (2) the extensions (4) of the cutting part (1) can be fitted overlapping the stud (18) and they are supported on the stud (18) with an interference fit with two mutually opposing, narrow-sided lateral boundaries (6) on two diametrically opposed boundaries of the outer wail (7) of the stud (18).

11. A fastener according to Claim 10, characterised in that the mutually facing lateral boundaries (6) of the two extensions (4) diverge with respect to one another at least at the free end thereof.

12. A fastener according to Claim 10 or 11, characterised in that the stud (18) on the shank (2) is formed tapering conically at least in a partial region of its length.

13. A fastener according to any one of Claims 10 to 12, characterised in that the extensions (4) of the cutting part (1) is formed rounded at the transition between their lateral boundaries (6) and their front boundary (8).

14. A fastener according to any one of Claims 10 to 13, characterised in that the cutting part (1) is provided with cutting-edge like edges (13) in the region disposed between two extensions (4).

15. A fastener according to any one of Claims 10 to 14, characterised in that for the additional form-locking connection between the cutting part (1) and the shank (2) radially directed slots (11) originating from the stud (18) are provided at the free end of the shank (2), wherein in the axial direction of the shank (2), measured from its free end, the length of the stud (18), measured from the slot bottom to the free of the shank (2), is at least two to three times as great as the depth (T2) of the slots (11).

16. A fastener according to any one of Claims 10 to 15, characterised in that beads (12), lugs or the like, which are formed by stamping or pressing, are provided at the end face of the shank (2) on one or both sides of the central stud (18) for the additional form-locking mounting of the cutting part (1).

## Revendications

1. Dispositif de fixation autoforeur avec une pièce tranchante (1) en forme de plaquette, pouvant être fixée à la tige (2) par une liaison par la forme et/ou par la force, caractérisé
- en ce que la pièce tranchante (1) en forme de plaque comporte à son extrémité associée à la tige (2) au moins un prolongement en forme de plaquette, situé dans le plan de la pièce tranchante (1),
- en ce que l'extrémité de la tige (2) portant la pièce tranchante (1) comprend une ouverture (5) centrale de section transversale circulaire, elliptique ou polygonale et pour le centrage et la fixation par la force de la pièce tranchante (1) sur la tige (2), le prolongement (4) de la pièce tranchante (1) peut être inséré dans l'ouverture (5) de la tige par ajustage serré, et il est appuyé dans l'ouverture (5) avec ses délimitations latérales (6) opposées l'une à l'autre formant les côtés étroits du prolongement (4) en forme de plaquette contre deux délimitations diamétralement opposées l'une à l'autre de la paroi interne (7) de l'ouverture (5).

2. Dispositif de fixation selon la revendication 1, caractérisé en ce que les délimitations latérales (6) du prolongement (4) convergent l'une vers l'autre au moins à l'extrémité libre de celui-ci.

3. Dispositif de fixation selon la revendication 1 ou 2, caractérisé en ce que l'ouverture (5) est réalisée dans la tige (2) en s'amincissant coniquement au moins sur une partie de sa hauteur.

4. Dispositif de fixation selon l'une des revendications 1 à 3, caractérisé en ce que le prolongement (4) est arrondi au passage entre ses délimitations latérales (6) et sa délimitation frontale (8).

5. Dispositif de fixation selon l'une des revendications 1 à 4, caractérisé en ce que l'ouverture (5) dans la tige (2) à section transversale polygonale, comporte un nombre pair de coins, et les délimitations latérales (6) du prolongement (4) de la pièce tranchante (1) s'enclenchent avec ajustage serré dans deux zones de coins diamétralement opposées l'une à l'autre de l'ouverture (5).

6. Dispositif de fixation selon l'une des revendications 1 à 5, caractérisé en ce que la pièce tranchante (1) sur sa délimitation associée au prolongement (4) est munie d'arêtes (13) de coupe dans les zones dépassant latéralement du prolongement (4).

7. Dispositif de fixation selon l'une des revendications 1 à 6, caractérisé en ce que pour la liaison par la forme additionnelle entre la partie de coupe (1) et la tige (2), sont prévues des rainures (11) en direction radiale à l'extrémité libre de la tige (2) à partir de l'ouverture (5), et la profondeur (T1) de l'ouverture (5) mesurée dans le sens de l'axe de la tige (2) à partir de son extrémité libre est au moins deux à trois fois plus grande que la profondeur (T2) de la rainure (11).

8. Dispositif de fixation selon la revendication 1, caractérisé en ce que pour la liaison par la forme supplémentaire entre pièce tranchante (1) et tige (2) à l'extrémité libre de la tige (2), une rainure parallèle à l'axe est réalisée d'un côté de sa paroi extérieure ou bien sont réalisées deux rainures (15) parallèles à l'axe des deux côtés en deux endroits diamétralement opposés, et en ce que la pièce tranchante (1) comprend sur une seule ou les deux délimitations latérales (6) une nervure (16) saillant parallèlement au prolongement (4), qui s'enclenche à l'état monté dans la rainure (15) de la tige (2).

9. Dispositif de fixation selon l'une des revendications 1 à 8, caractérisé en ce que, sur la face frontale de la tige (2) sur un seul ou les deux côtés de l'ouverture centrale (5), des bourrelets (12), nez ou équivalents sont prévus déformés par enfoncement ou pressage par rapport à la fixation par interpénétration par la forme supplémentaire de la pièce tranchante (1).

10. Dispositif de fixation autoforeur avec une pièce tranchante (1) en forme de plaquette, à fixer par liaison par la forme et/ou par la force, caractérisé en ce que la pièce tranchante (1) en forme de plaquette comporte à son extrémité associée à la tige (2) plusieurs prolongements (4) consécutifs avec un certain espacement, situés dans le plan de la pièce tranchante (1), en ce que l'extrémité de la tige (2) portant la pièce tranchante (1) comprend un tenon (18) central, en saillie axiale, comportant une section transversale circulaire, elliptique ou polygonale et pour le centrage et la fixation par la force de la pièce tranchante (1) sur la tige (2) les prolongements (4) de la pièce tranchante (1) peuvent être mis en place sur le tenon (18) en l'entourant et s'appuyer sur le tenon (18) en ajustage serré avec deux délimitations latérales (6) de petit côté, tournées l'une vers l'autre contre deux délimitations diamétralement opposées de la paroi extérieure du tenon (18).

11. Dispositif de fixation selon la revendication 10, caractérisé en ce que les délimitations latérales (6) tournées l'une vers l'autre de deux prolongements (4) divergent l'une vers l'autre au moins à l'extrémité libre de ceux-ci.

12. Dispositif de fixation selon les revendications 10 ou 11, caractérisé en ce que le tenon (18) est réalisé sur la tige (2) en s'amincissant coniquement au moins sur une zone partielle de sa longueur.

13. Dispositif de fixation selon les revendications 10 à 12, caractérisé en ce que les prolongements (4) de la pièce tranchante (1) sont arrondis à la transition entre leurs délimitations latérales (6) et leur délimitation frontale (8).

14. Dispositif de fixation selon les revendications 10 à 13, caractérisé en ce que la pièce tranchante (1) est munie d'arêtes (13) de type coupant dans la zone située entre deux prolongements (4).

15. Dispositif de fixation selon l'une des revendications 10 à 14, caractérisé en ce que pour la liaison par la forme supplémentaire entre la pièce tranchante (1) et la tige (2) sont prévues à l'extrémité libre de la tige (2) à partir du tenon (18) portant des rainures (11) dirigées radialement, tandis que dans le sens de l'axe de la tige (2) à partir de son extrémité libre, la longueur du tenon (18) mesurée depuis la base de la rainure par rapport à l'extrémité libre de la tige (2) est au moins deux à trois fois plus grande que la profondeur (T2) de la rainure (11).

16. Dispositif de fixation selon l'une des revendications 10 à 15, caractérisé en ce que sur la face frontale de la tige (2) sont prévus sur un seul ou sur les deux côtés du tenon central (18) des bourrelets (12), nez ou équivalents déformés par enfoncement ou pressage par rapport à la fixation supplémentaire par liaison par la forme de la pièce tranchante (1).
